# FASCICULE DE BREVET EUROPEEN

(11) **EP 3 931 154 B1**
(45) Date de publication et mention de la délivrance du brevet: **09.04.2025**
(21) Numéro de dépôt: 20703504.9
(22) Date de dépôt: 13.02.2020
(51) Int. Cl.: C02F 1/24, B03D 1/14, B03D 1/24

(54) **INSTALLATION MODULAIRE DE TRAITEMENT D'EAU PAR FLOTTATION**
MODULARE ANLAGE ZUR WASSERAUFBEREITUNG MITTELS FLOTATION
MODULAR INSTALLATION FOR TREATING WATER BY FLOTATION

(30) Priorité: 25.02.2019 FR 1901906
(43) Date de publication de la demande: 05.01.2022
(73) Titulaire: Veolia Water Solutions & Technologies Support, 94417 Saint-Maurice Cedex (FR)
(72) Inventeur: DEL PICOLO, Cristina, 33080 ROVEREDO IN PIANO (IT); GIROLAMI, Giuseppe, 31100 TREVISO (IT); VERCHERE, Romain, 75012 PARIS (FR); VIGNERON-LAROSA, Nathalie, 93100 MONTREUIL (FR)
(74) Mandataire: Cabinet Beau de Loménie
(86) Numéro de dépôt international: PCT/EP2020/053797
(87) Numéro de publication internationale: WO 2020/173716

(56) Documents cités:
- DE-U1- 9 300 384
- FR-A1- 2 916 196
- KR-A- 20150 062 406
- US-A1- 2004 168 964
- US-A1- 2017 297 924

## Description

### Domaine de l'Invention

Le domaine de l'invention est celui du traitement des eaux en vue de leur épuration ou de leur potabilisation.

Plus particulièrement, l'invention concerne une installation de traitement d'eau par flottation.

### Art antérieur

Les liquides ou eaux contaminés peuvent contenir des matières en suspension (particules, algues, bactéries, ...) et des matières dissoutes (matières organiques, micro polluants...). Il existe dans l'état de la technique plusieurs techniques de traitement des matières en suspension ayant pour objectif de diminuer leurs teneurs.

Parmi ces techniques, on peut citer la décantation et la flottation.

Le traitement des eaux par flottation présente de nombreux avantages par rapport au traitement par décantation.

Un premier avantage est que la vitesse de traitement d'une eau par flottation est supérieure à la vitesse de traitement par décantation classique.

Un autre avantage est que le traitement par flottation permet d'atteindre une meilleure élimination des algues, ainsi que des huiles et des graisses par rapport au traitement par décantation pour un débit d'eau à traiter supérieur.

Par ailleurs, un autre avantage du traitement par flottation est lié au fait qu'il permet de réduire le volume de boues produit.

Parmi les processus de flottation, on distingue :
la flottation naturelle, où la différence de masse volumique entre la matière en suspension et l'eau qui la contient est naturellement suffisante pour permettre leur séparation (la matière flotte à la surface de l'eau) ;
la flottation assistée qui consiste à mettre en oeuvre une insufflation de bulles d'air au sein de la masse de liquide pour améliorer la séparation des particules et les rendre ainsi flottables ;
la flottation provoquée où la masse volumique de la matière en suspension est au départ supérieure à celle de l'eau qui la contient et est artificiellement réduite grâce à des bulles de gaz. En effet, certaines particules solides ou liquides peuvent s'unir à des bulles de gaz pour former des attelages « particule-bulle » moins dense que l'eau qui les contient ;
La flottation à air dissous (FAD) est un processus de flottation provoquée qui utilise des bulles de très faible diamètre, en pratique de 40 à 70 micromètres de diamètre. Elle comporte généralement une association de différentes étapes : une coagulation afin de neutraliser les charges de surface des colloïdes, et l'adsorption des matières dissoutes ; une floculation, à l'aide d'un matériau polymère floculant permettant l'agglomération des particules ; une injection d'eau pressurisée permettant la mise en contact des microbulles et de l'eau floculée ; une séparation permettant la séparation du floc et du liquide clarifié ; une collecte du liquide clarifié ; une collecte des « boues »flottées.

La technique FAD s'applique traditionnellement dans le cadre de la potabilisation des eaux, à des eaux de bonne qualité, aux eaux froides et peu chargées en matières en suspension, et tout particulièrement aux eaux de retenues riches en algues. La FAD trouve aussi son application dans le traitement des eaux usées municipales ou industrielles en vue de leur épuration.

Ainsi, on connaît par le document FR 2 916 196 A1 une installation de flottation typique de l'art antérieur. On connaît aussi par WO2008142026 une installation de flottation comprenant une cuve de contact de l'eau à traiter avec des microbulles d'air, une zone prévue sous cette cuve et séparée de celle-ci par un plancher perforée accueillant des buses d'injection de microbulles d'air, et une cuve de flottation séparée de la cuve de contact par une paroi franchie dans sa partie supérieure par le mélange d'eau et de microbulles d'air.

Selon cette installation, la cuve de contact est prévue à une extrémité de la cuve de flottation, ce qui a pour inconvénient qu'au sein de la cuve de contact la répartition des microbulles d'air n'est pas uniforme mais connaît au contraire un gradient. En pratique, il y a plus de bulles d'air dans la zone de la cuve de flottation proche de la cuve de contact que dans la zone de la cuve de flottation éloignée de celle-ci. Ce gradient conduit à un traitement non homogène de l'eau arrivant dans l'installation. Une partie de cette eau reçoit plus de bulles d'air que le reste et est donc mieux traitée.

Un autre inconvénient réside dans la conception et les dimensions de cette installation qui la rend difficilement transportable, notamment par conteneurs. Or, il existe sur le marché un besoin grandissant pour des installations de traitement d'eau, et notamment de flottateurs, pouvant être transportées facilement, notamment sur des conteneurs pouvant être chargés sur des navires porte-conteneurs, afin de pouvoir les amener sur des sites éloignés de leur site de fabrication. Ceci se produit par exemple lorsque ces installations sont destinées à être utilisées sur des sites de catastrophes naturelles sur lesquels les moyens de traitement d'eau ont été endommagés ou détruits, ou à être louées pour des besoins ponctuels.

Un autre inconvénient réside aussi dans le fait que de telles installations ne sont pas modulaires. Or, il existe sur le marché un besoin grandissant pour des installations de traitement d'eau, et notamment les flottateurs, ayant un caractère modulaire leur permettant d'offrir différentes capacités de traitement et de s'affranchir de l'utilisation d'installation surdimensionnées impliquant des augmentation des coûts de traitement.

A ce sujet, on notera que la Déposante a déjà proposé des installations de flottation modulaires, décrites dans les demandes de brevet italien ITTO20080399A1 ITTO20080401A1 et ITTO20080402A1. De telles installations sont constituées par l'association de modules présentant chacun une section en U avec une paroi latérale pourvue d'un renfoncement délimitant une zone de contact avec l'eau à traiter, un floculant et de l'eau blanche. Ainsi, chaque module présente sur une de ses parois, un renfoncement dans lequel le contact de l'eau à traiter et de l'eau blanche est effectué. Ces installations sont modulaires et permettent de donner à l'installation une capacité plus ou moins élevée en fonction du nombre de module utilisé pour la réaliser.

Toutefois, de par leurs dimensions (encombrement), ces installations ne sont également pas transportables par container normalisé pour le transport maritime.

De plus, le fait que chaque module soit doté de sa zone de contact dédiée, en pratique d'un renfoncement, complexifie la fabrication des modules et impacte le coût global de tels flottateurs.

Enfin, avec ce type d'installation, il est nécessaire de régler la production d'eau blanche avant sa mise en route, ce qui en pratique, conduit à limiter la vitesse selon laquelle les eaux à traiter transitent dans celle-ci et limite leur capacité.

### Objectifs de l'invention

La présente invention a pour objectif de proposer une installation de flottation modulaire, qui soit simple à réaliser.

Un autre objectif de l'installation est de décrire une telle installation qui soit compacte et transportable sur conteneur normalisé pour le transport maritime.

### Exposé de l'invention

Tout ou partie de ces objectifs sont atteints grâce à une installation selon la revendication 1.

L'invention propose donc de disposer la cuve de contact non plus à l'extrémité de la cuve de flottation, comme par exemple dans l'art antérieur selon WO2008056057, mais le long de celle-ci. Concomitamment, l'invention prévoit aussi que la cuve de contact délimite une zone de contact commune à tous les modules, résolvant ainsi le problème de complexité de réalisation liée à la technique selon ITTO20080399A1, ITTO20080401A1 et ITTO20080402A1.

La modularité permet de donner à l'installation une capacité plus ou moins élevée en fonction du nombre de modules utilisé pour la réaliser.

Selon l'invention, le flux d'eau à traiter amené dans la cuve de contact est perpendiculaire au flux d'eau dans la cuve de flottation. Ceci va à l'encontre des pratiques de l'homme du métier qui, classiquement, pour une meilleure répartition des flux massiques et hydrauliques au sein d'un flottateur, prévoit d'injecter les eaux à traiter de façon parallèle à la distribution des eaux dans la cuve de flottation.

Les dimensions des modules seront choisies pour permettre de réaliser des installations selon l'invention dont l'encombrement permettra leur transport par conteneur normalisé pour le transport maritime.

Préférentiellement, ces modules seront conçus de façon telle que l'installation obtenue en les associant présente une cuve de flottation dont la hauteur (H) est comprise entre 1 et 4 m, de préférence entre 1 et 2,5 m, et dont la largeur (L) est comprise entre 0,5 et 4 m. On notera qu'on entend par hauteur (H), la distance entre le point de collecte des eaux présent dans le fond de la cuve de flottation et le niveau auquel les eaux flottées sont collectée. On entend par ailleurs largeur (L) de la cuve de flottation, la distance entre la paroi verticale séparant la cuve de contact et la cuve de flottation et la paroi qui lui est opposée.

Avantageusement, lesdits moyens d'amenée d'eau blanche dans la cuve de contact incluent une pompe multiphasique associée à des buses aptes à produire des bulles de très faible diamètre, en pratique de 40 à 70 micromètres de diamètre.

L'utilisation de telles buses autorise la mise en œuvre de l'installation selon la présente invention à des vitesses au miroir des eaux dans le flottateur plus élevées, en pratique de l'ordre de 20 à 25 m/h, que celles pouvant être mises en œuvre avec les flottateurs de l'art antérieur, limitées généralement à 10 m/h pour des qualités d'eaux similaires.

Egalement avantageusement, lesdits moyens d'amenée d'eau blanche dans la cuve de contact incluent une pompe multiphasique et un mélangeur statique associés à des buses aptes à produire des bulles de très faible diamètre.

Selon une variante préférentielle, lesdits buses sont prévues à une hauteur (h) du fond de ladite cuve de contact comprise entre 0,2 et 2 mètres.

Lesdites buses sont prévues préférentiellement avec une densité de buses comprise entre 3 et 30 buses, préférentiellement entre 5 et 12 buses, par mètre carré de fond de la cuve de contact.

Également selon une variante, ledit ensemble est réalisé par l'association de 2 à 24, de préférence 2 à 12 modules.

Comme déjà indiqué ci-dessus les installations selon l'invention présentent un encombrement qui permet leur transport par conteneur normalisé pour le transport maritime.

Ainsi, préférentiellement, la longueur totale (LT) de l'installation selon l'invention est comprise entre 0,5 et 20 m de préférence entre 1 et 12 m.

Selon l'invention, lesdits moyens d'amenée d'eau à traiter dans ladite cuve de contact comprennent une canalisation perforée prévue longitudinalement dans la partie inférieure de ladite cuve de contact.

Avantageusement, lesdits moyens d'évacuation d'eau traitée comprennent au moins une canalisation perforée prévue longitudinalement dans la partie inférieure de ladite cuve de flottation.

Préférentiellement, lesdits moyens d'évacuation de boues flottées comprennent un racleur pourvu de moyens de déplacement selon un axe longitudinal, transversal au flux de distribution de l'eau dans la cuve de flottation.

Également préférentiellement, le rapport entre la hauteur (H) de la cuve de flottation et la largeur (L) de celle-ci est supérieur à 1,1.

### Liste des figures

Un mode de réalisation, donné simplement à titre d'exemple, de l'installation de flottation selon la présente invention va maintenant être décrit en détails, en référence aux dessins dans lesquels :
[Fig 1] la figure 1 représente une vue en perspective d'un mode de réalisation de la présente invention ;
[Fig 2] la figure 2 représente une vue en perspective partiellement en transparence de ce mode de réalisation ;
[Fig 3] la figure 3 est en une vue en coupe horizontale P-P' de l'installation visant à expliciter les flux d'eau dans les cuves de celles-ci ;
[Fig 4] la figure 4 est une vue en perspective d'un des modules constituant l'ensemble de cuves de contact et de flottation de cette installation ;
[Fig 5] la figure 5 est une vue schématique de dessus de l'ensemble de cuves de contact et de flottation de cette installation ;
[Fig 6] la figure 6 est une vue en coupe de coté de l'ensemble de cuves de contact et de flottation de cette installation ;
[Fig 7] la figure 7 est un graphe indiquant l'abattement des matières en suspension d'un effluent grâce à une installation de flottation de l'art antérieur selon WO2008142026 ;
[Fig 8] la figure 8 est un graphe indiquant les teneurs des matières en suspension en entrée et en sortie d'une installation de flottation selon l'invention du même effluent ;
[Fig 9] la figure 9 est une photographie prise du dessus de la cuve de contact de l'installation selon l'invention décrite en référence aux figure 1 à 6 au cours des tests ayant permis l'élaboration du graphe selon la figure 8.

### Mode de réalisation d'une installation selon l'invention

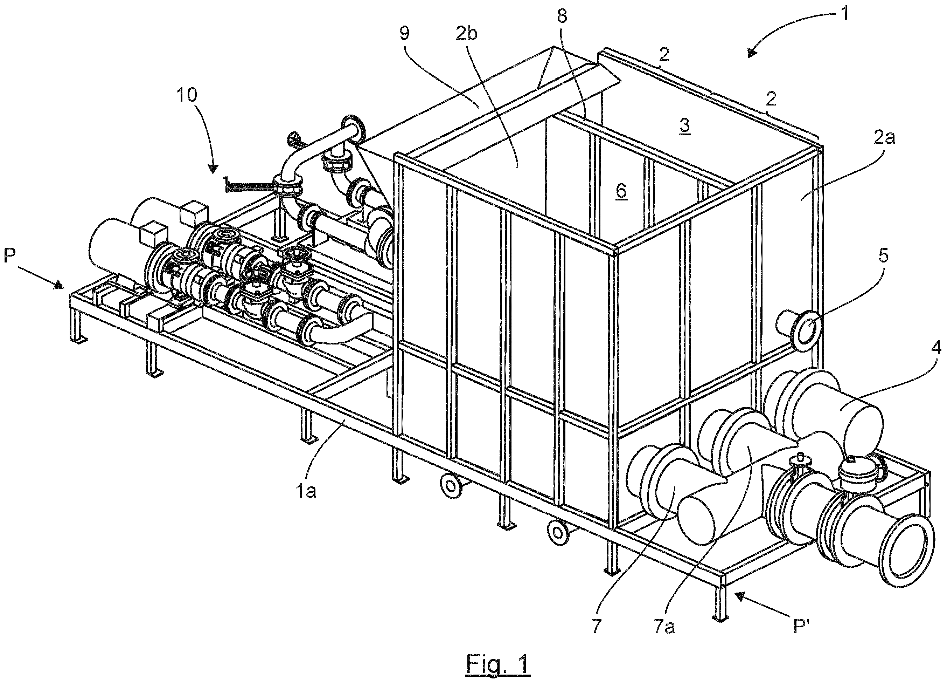

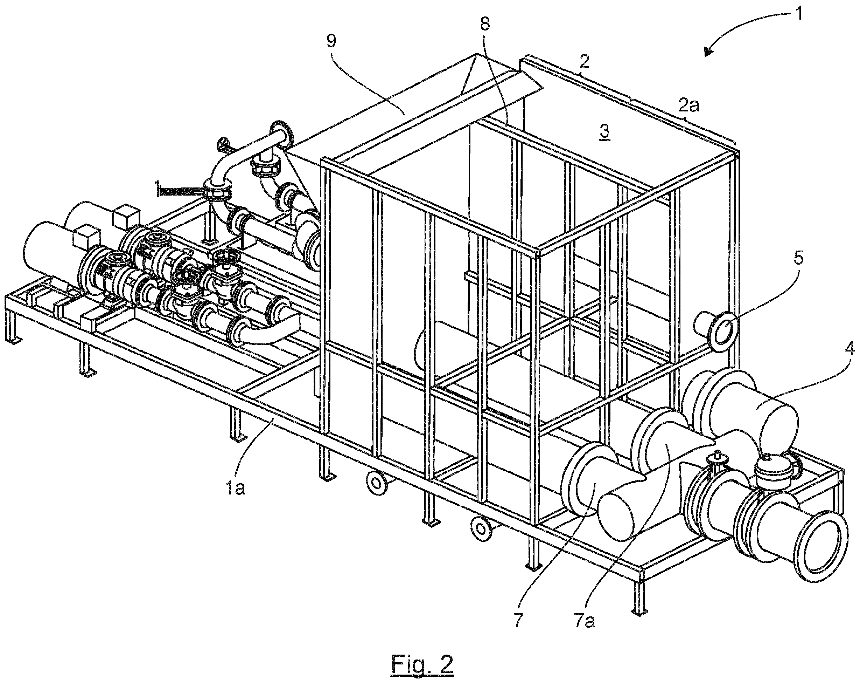

En référence aux figure 1 à 6, l'installation représentée comprend un ensemble 1 de cuves présentant une forme parallélépipédique disposée sur un châssis 1a. Outre cet ensemble 1, ce châssis 1a reçoit des moyens de production d'eau blanche 10.

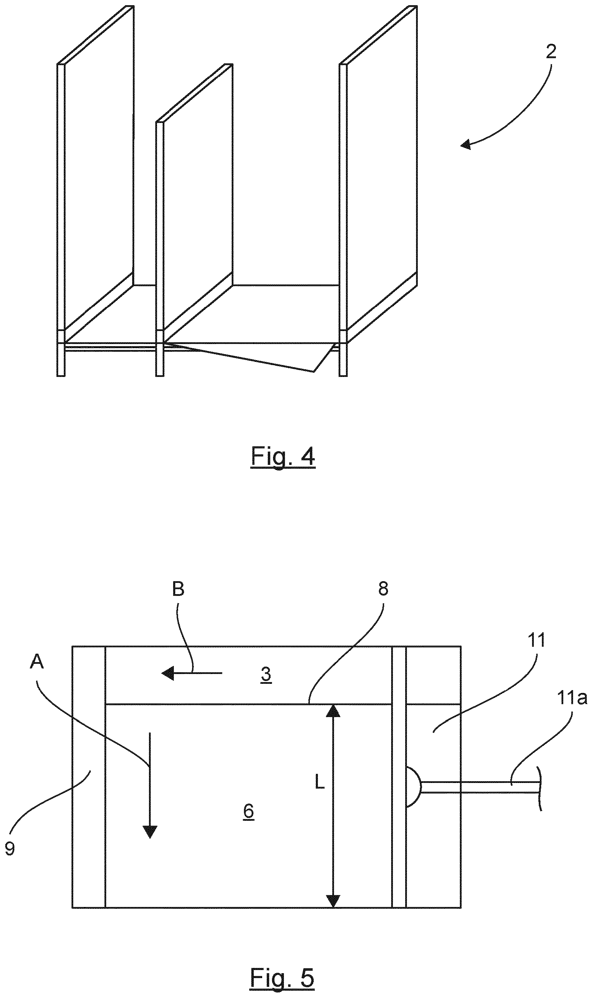

Cet ensemble de cuves est réalisé par l'association de deux modules 2 tels que représentés à la figure 4. On notera que dans d'autres modes de réalisation on pourra bien évidemment utiliser plus de deux modules pour réaliser ledit ensemble.

Ces modules 2 sont reliés entre eux et associés à des parois d'extrémité 2a et 2b pour former l'ensemble 1 selon des techniques connues de l'homme de l'art et ainsi réaliser une cuve de contact 3 et une cuve de flottation 6.

La cuve de contact 3 est pourvue de moyens d'amenée d'eau à traiter 4 et de moyens d'amenée d'eau blanche 5.

Les moyens d'amenée d'eau à traiter 4 incluent une canalisation perforée prévue dans la partie inférieure de la cuve de contact 3, longitudinalement à celle-ci.

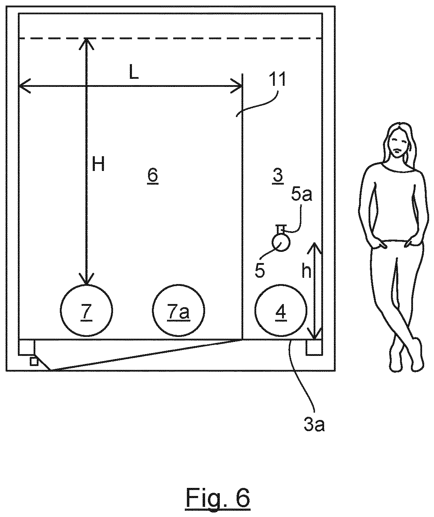

Les moyens d'amenée d'eau blanche 5 incluent une canalisation d'amenée équipée de buses 5a (voir figure 6) permettant de générer des bulles d'air de très faible diamètre et reliée à une pompe multiphasique (non représentée).

Cette canalisation est prévue parallèle à la canalisation des moyens d'amenée d'eau à traiter 4, au-dessus de celle-ci. Comme on peut le voir sur la figure 6, ces buses sont ainsi prévues dans la cuve de contact à une hauteur (h) du fond 3a de celle-ci, comprise entre 0,2 et 2 mètres. La densité de buses sur la canalisation est étudiée afin d'optimiser le processus de flottation dans la cuve de flottation et est, en pratique, avantageusement comprise entre 3 et 30 buses par mètre carré de fond de la cuve de contact.

La cuve de flottation 6 est par ailleurs pourvue de moyens d'évacuation d'eau traitée comprenant deux canalisations 7, 7a prévues dans sa partie inférieure. La cuve de flottation 6 est séparée de ladite cuve de contact par une paroi verticale 8.

La cuve de flottation est par ailleurs équipée de moyens d'évacuation de boues flottées comprenant un déversoir 9 et un racleur 11 (visible sur la figure 5).

Selon l'invention, ladite cuve de contact 3 est prévue le long de ladite cuve de flottation 6 et délimite une zone unique de contact de ladite eau à traiter avec ladite eau blanche.

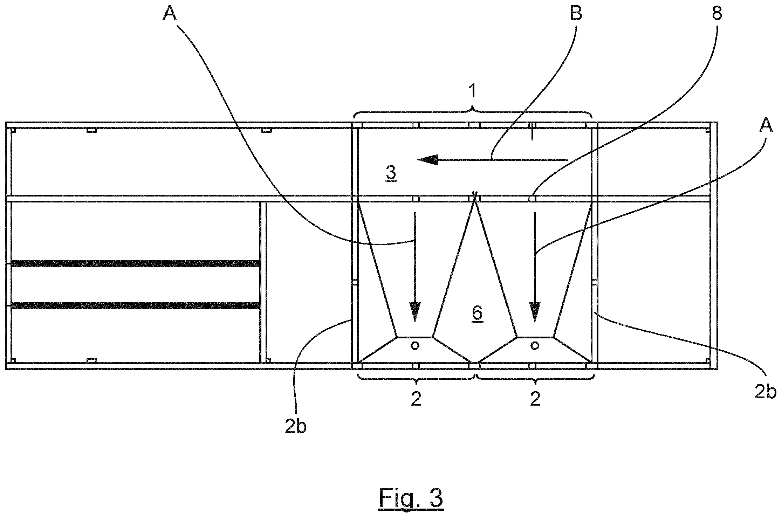

Également selon l'invention, et en référence à la figure 3, les moyens d'amenée d'eau à traiter 4 sont conçus pour distribuer l'eau à traiter dans la cuve de contact 3 selon un flux d'amenée d'eau longitudinal, le flux de distribution (A) d'eau dans la cuve de flottation 3 étant perpendiculaire au flux d'amenée d'eau (B) dans la cuve de contact 6.

En fonctionnement, l'eau à traiter est acheminée dans la zone unique de flottation délimitée par la cuve de flottation 3, par la canalisation 4, où elle est mise en contact avec l'eau blanche fournie par la canalisation 5 pourvue de buses.

Les très fines bulles d'air dispensées par ces buses se mélangent immédiatement à l'eau à traiter et ce mélange franchit par surverse la paroi 8 pour pénétrer dans la cuve de flottation 6. Dans cette cuve 8, la flottation des matières à séparer de l'eau a lieu grâce à l'action des bulles d'air qui, en se mélangeant à ces matières, diminuent leur densité et les fait donc flotter.

Périodiquement, le racleur 11 est mis en oeuvre pour pousser les matières flottant à la surface des eaux présentes dans la cuve de flottation mais aussi dans la cuve de contact vers le déversoir 9, afin d'être évacuées de l'installation en vue d'un éventuel traitement. A cette fin, ce racleur présente un axe 11a de déplacement perpendiculaire au flux de traitement A des eaux dans la cuve de flottation 6.

On notera donc que le racleur 11 est conçu pour racler tant la surface de l'eau présente dans la cuve de flottation 6 que celle présente dans la cuve de contact 3. Corollairement, le déversoir 9 s'étend transversalement à ces deux cuves pour pouvoir recevoir les matières flottées.

L'eau traitée est quant à elle récupérée dans la partie inférieure de la cuve de flottation par les canalisations 7 et 7a.

### Tests comparatifs

L'installation de flottation selon l'invention décrite ci-dessus et une installation de flottation de l'art antérieur selon WO2008142026 ont été mises en œuvre pour traiter un effluent constitué par des eaux provenant d'une industrie laitière.

En comparaison, l'installation selon l'invention est beaucoup plus compacte que l'installation de l'art antérieur testée. En pratique cette installation selon l'invention présente une taille inférieure de 30 % à cette dernière.

De plus, par rapport à cette installation de l'art antérieur, l'installation selon l'invention est modulaire et transportable en conteneur alors que celle de l'art antérieur n'est ni modulaire ni transportable.

Différents lots dudit effluent ont été traités par l'installation selon WO2008142026 et, pour chaque lot, les teneurs en matières en suspension (MES) en entrée sur l'eau brute et en sortie d'installation sur l'eau clarifiée ont été mesurées pour en déduire, pour chaque lot, le taux d'abattement, exprimé en %, en ces matières.

Durant ces tests, un coagulant et un floculant ont été injectés dans l'installation.

Les tests ont été effectués en faisant transiter l'effluent dans l'installation selon une vitesse au miroir de 26 m/h.

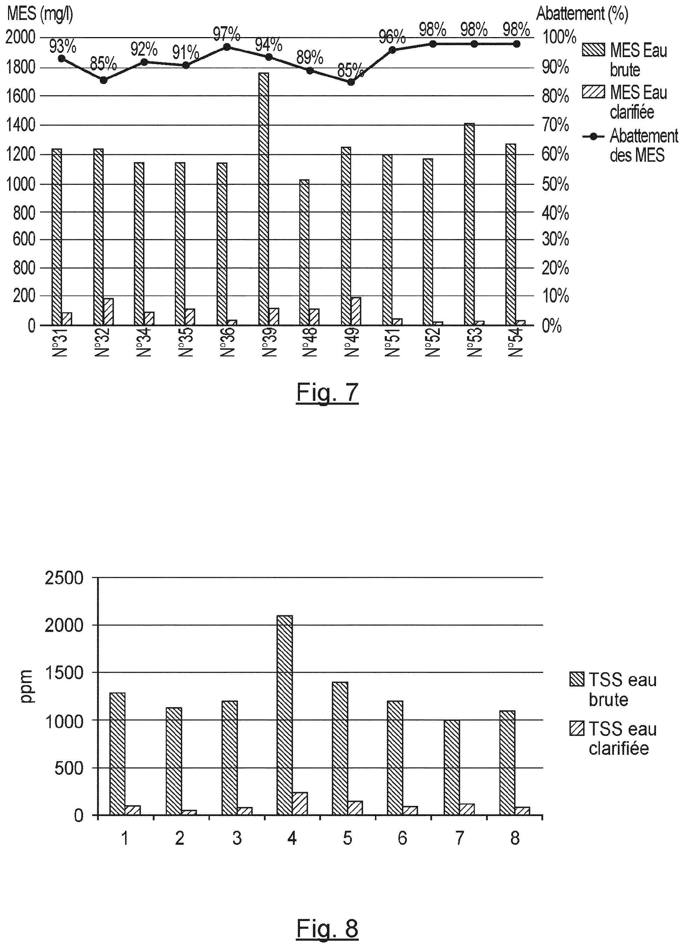

En référence à la figure 7, des taux d'abattement de matières en suspension variables selon les lots ont été observés de 85 % à 98%.

Différents lots du même effluent ont ensuite été traités grâce au mode de réalisation de l'invention décrit en référence aux figure 1 à 6.

En référence à la figure 8, pour chaque lot, les teneurs en matières en suspension (TSS) en entrée et en sortie d'installation ont été mesurées. D'après ces mesures, les taux d'abattement de matières en suspension ont été calculés et se sont révélés être tout à fait comparables à ceux obtenus avec l'installation selon WO2008142026.

Les tests ont été effectués en faisant transiter l'effluent dans l'installation selon des vitesses au miroir également similaires à celles mise en oeuvre avec l'installation de l'art antérieur, variant de 20 à 25 m/h selon les lots.

Ces tests comparatifs démontrent que l'installation selon l'invention autorise des performances de traitement équivalentes à celle de l'installation de l'art antérieur tout en étant d'une taille inférieure de 30 % à celle-ci.

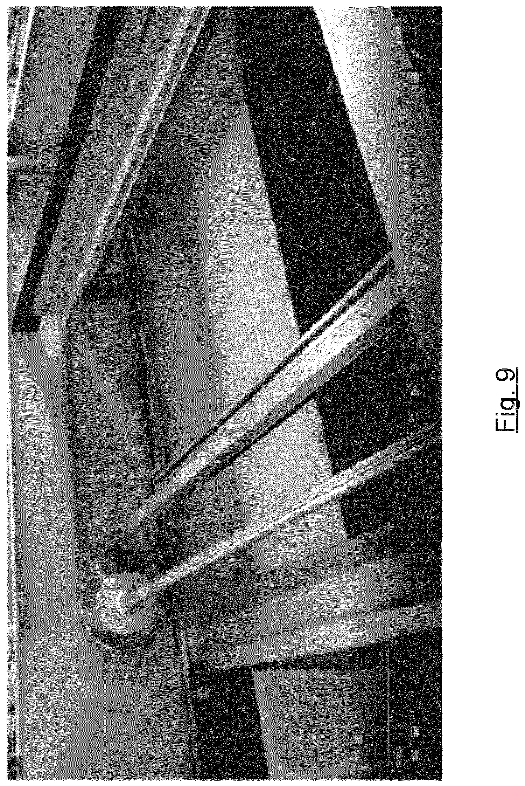

Ceci résulte de la meilleure distribution de l'eau blanche dans la cuve de contact permise grâce à l'invention. En référence à la photographie selon la figure 9, qui montre une teinte uniformément blanche du mélange d'effluent et d'eau blanche présent dans la cuve de contact de l'installation selon les figure 1 à 6, l'invention permet en effet de répartir uniformément l'eau blanche dans la cuve de contact et donc de s'assurer que l'intégralité de l'effluent traité est bien mise en contact avec la même quantité d'eau blanche.

## Revendications

1. Installation de traitement d'eau par flottation comprenant un ensemble (1) de forme essentiellement parallélépipédique réalisé par l'association de modules (2,2a), ledit ensemble comprenant une cuve de contact (3) pourvue de moyens d'amenée d'eau à traiter (4) incluant une canalisation perforée prévue longitudinalement dans sa partie inférieure et de moyens d'amenée d'eau blanche (5) incluant une canalisation d'amenée d'eau blanche équipée de buses (5a), ladite canalisation d'amenée d'eau blanche étant prévue parallèle à et au-dessus de ladite canalisation perforée, une cuve de flottation (6) pourvue de moyens d'évacuation d'eau traitée (7, 7a), ladite cuve de flottation (6) étant séparée de ladite cuve de contact par une paroi verticale (8), et des moyens d'évacuation de boues flottées, **caractérisée en ce que** :
ladite cuve de contact (3) est prévue le long de ladite cuve de flottation (6) et délimite une zone unique de contact de ladite eau à traiter avec ladite eau blanche, et **en ce que** lesdits moyens d'amenée d'eau à traiter (4) sont conçus pour distribuer l'eau à traiter dans ladite cuve de contact selon un flux longitudinal d'amenée d'eau à traiter (B) dans ladite canalisation perforée (4),
le flux de distribution d'eau (A) dans la cuve de flottation (6) correspondant au flux d'eau qui franchit ladite paroi verticale (8) pour passer par surverse de la cuve de contact (3) à la cuve de flottation (6) étant perpendiculaire audit flux d'amenée d'eau à traiter (B) dans ladite cuve de contact.

2. Installation selon la revendication 1 **caractérisée en ce que** la hauteur (H) de la cuve de flottation est comprise entre 1 et 4 m, de préférence entre 1 et 2,5 m et **en ce que** la largeur (L) de la cuve de flottation est comprise entre à 0,5 et 4 m.

3. Installation selon la revendication 1 ou 2 caractérisée lesdits moyens d'amenée d'eau blanche dans la cuve de contact incluent une pompe multiphasique associée à des buses aptes à produire des bulles de très faible diamètre.

4. Installation selon la revendication 3 caractérisée lesdits moyens d'amenée d'eau blanche dans la cuve de contact incluent une pompe multiphasique et un mélangeur statique associés à des buses aptes à produire des bulles de très faible diamètre.

5. Installation selon la revendication 3 ou 4 **caractérisée en ce que** lesdits buses sont prévues à une hauteur (h) du fond de ladite cuve de contact comprise entre 0,2 et 2 mètres.

6. Installation selon la revendication 5 **caractérisée en ce que** lesdites buses sont prévues avec une densité de buses comprise entre 3 et 30 buses, préférentiellement entre 5 et 12 buses, par mètre carré de fond de ladite cuve de contact.

7. Installation selon l'une quelconque des revendications précédentes **caractérisée en ce que** ledit ensemble est réalisé par l'association de 2 à 24, de préférence 2 à 12 modules.

8. Installation selon l'une quelconque des revendications précédentes **caractérisée en ce que** sa longueur totale (LT) est comprise entre 0,5 et 20 m de préférence entre 1 et 12 m.

9. Installation selon l'une quelconque des revendications précédentes **caractérisée en ce que** lesdits moyens d'évacuation d'eau traitée comprennent au moins une canalisation perforée prévue longitudinalement dans la partie inférieure de ladite cuve de flottation.

10. Installation selon l'une quelconque des revendications précédentes **caractérisée en ce que** lesdits moyens d'évacuation de boues flottées comprennent un racleur pourvu de moyens de déplacement selon un axe longitudinal, transversal au flux de distribution (A) de l'eau dans la cuve de flottation.

11. Installation selon l'une quelconque des revendications précédentes **caractérisée en ce que** le rapport entre la hauteur (H) de la cuve de flottation et la largeur (L) de celle-ci est supérieure à 1,1.

## Patentansprüche

1. Anlage zur Flotationwasseraufbereitung, umfassend eine Anordnung (1) mit im Wesentlichen parallelepipeder Form, die durch die Verbindung von Modulen (2, 2a) durchgeführt wird, wobei die Anordnung einen Kontakttank (3) umfasst, der mit Mitteln zur Zuführung von aufzubereitendem Wasser (4) versehen ist, darin eingeschlossen eine perforierte Rohrleitung, die in der Längsrichtung in ihrem unteren Teil vorgesehen ist, und Mittel zum Zuführen von weißem Wasser (5), darin eingeschlossen eine Rohrleitung zum Zuführen von weißem Wasser, die mit Düsen (5a) versehen ist, wobei die Rohrleitung zum Zuführen von weißem Wasser parallel und unter der perforierten Rohrleitung vorgesehen ist, einen Flotationstank (6), der mit Mitteln zur Ableitung von aufbereitetem Wasser (7, 7a) versehen ist, wobei der Flotationstank (6) von dem Kontakttank durch eine vertikale Wand (8) getrennt ist, und Mittel zur Ableitung von Schwimmschlämmen, **dadurch gekennzeichnet, dass**
der Kontakttank (3) entlang des Flotationstanks (6) vorgesehen ist und einen einzigen Kontaktbereich des aufzubereitenden Wassers mit dem weißen Wasser begrenzt, und dadurch, dass die Mittel zum Zuführen von aufzubereitendem Wasser (4) entworfen sind, um das aufzubereitende Wasser in dem Kontakttank gemäß einer Längsströmung zum Zuführen von aufzubereitendem Wasser (B) in die perforierte Rohrleitung (4) zu verteilen,
wobei die Strömung zum Verteilen von Wasser (A) in dem Flotationstank (6) der Strömung von Wasser entspricht, das die vertikale Wand (8) passiert, um durch den Überlauf vom Kontakttank (3) in den Flotationstank (6) zu strömen, senkrecht zu der Strömung zum Zuführen von aufzubereitendem Wasser (B) in dem Kontakttank ist.

2. Anlage nach Anspruch 1, **dadurch gekennzeichnet, dass** die Höhe (H) des Flotationstanks im Bereich zwischen 1 und 4 m, vorzugsweise zwischen 1 und 2,5 m, liegt, und dadurch, dass die Breite (L) des Flotationstanks im Bereich zwischen 0,5 und 4 m liegt.

3. Anlage nach Anspruch 1 oder 2, **dadurch gekennzeichnet, dass** die Mittel zum Zuführen von weißem Wasser in den Kontakttank eine mehrphasige Pumpe beinhalten, die Düsen zugewiesen ist, die ausgelegt sind, um Blasen mit sehr geringem Durchmesser zu erzeugen.

4. Anlage nach Anspruch 3, **dadurch gekennzeichnet, dass** die Mittel zum Zuführen von weißem Wasser in den Kontakttank eine mehrphasige Pumpe und einen statischen Mischer beinhalten, die Düsen zugewiesen sind, die ausgelegt sind, um Blasen mit sehr geringem Durchmesser zu erzeugen.

5. Anlage nach Anspruch 3 oder 4, **dadurch gekennzeichnet, dass** die Düsen mit einer Höhe (h) des Bodens des Kontakttanks im Bereich zwischen 0,2 und 2 Meter vorgesehen sind.

6. Anlage nach Anspruch 5, **dadurch gekennzeichnet, dass** die Düsen mit einer Dichte von Düsen vorgesehen sind, die im Bereich zwischen 3 und 30 Düsen, vorzugsweise zwischen 5 und 12 Düsen pro Quadratmeter Boden des Kontakttanks liegt.

7. Anlage nach einem der vorhergehenden Ansprüche, **dadurch gekennzeichnet, dass** die Anordnung durch die Verbindung von 2 bis 24, vorzugsweise 2 bis 12 Modulen durchgeführt wird.

8. Anlage nach einem der vorhergehenden Ansprüche, **dadurch gekennzeichnet, dass** ihre Gesamtlänge (LT) im Bereich zwischen 0,5 und 20 m, vorzugsweise 1 und 12 m liegt.

9. Anlage nach einem der vorhergehenden Ansprüche, **dadurch gekennzeichnet, dass** die Mittel zum Ableiten von aufzubereitendem Wasser mindestens eine perforierte Rohrleitung umfassen, die in der Längsrichtung des unteren Teils des Flotationstanks vorgesehen ist

10. Anlage nach einem der vorhergehenden Ansprüche, **dadurch gekennzeichnet, dass** die Mittel zur Ableitung der schwimmenden Schlämme einen Abstreifer umfassen, der mit Mitteln zur Verschiebung gemäß einer Längsachse quer zur Verteilungsströmung (A) des Wassers in dem Flotationstank versehen ist.

11. Anlage nach einem der vorhergehenden Ansprüche, **dadurch gekennzeichnet, dass** die Beziehung zwischen der Höhe (H) des Flotationstanks und der Breite (L) desselben grösser als 1,1 ist.

## Claims

1. Installation for treating water by flotation, comprising a substantially parallelepipedal assembly (1) produced by connecting modules (2, 2a), said assembly comprising a contact tank (3) which is provided with supply means for water to be treated (4) including a perforated pipe provided longitudinally in its lower part and supply means for white water (5) including a supply pipe for white water provided with nozzles, said supply pipe for white water being provided parallel and above said perforated pipe, a flotation tank (6) which is provided with means for discharging treated water (7, 7a), said flotation tank (6) being separated from said contact tank by a vertical wall (8), and means for discharging floated sludge, **characterised in that** said contact tank (3) is provided along said flotation tank (6) and delimits a single contact zone for said water to be treated with said white water, and **in that** said supply means for water to be treated (4) are configured to distribute the water to be treated in said contact tank according to a longitudinal water supply flow through said perforated pipe, the water distribution flow in the flotation tank (A), which correspond to the flow of water which cross by overflow said vertical wall (8) to go from the contact tank (3) to the flotation tank (6), being perpendicular to said water supply flow (B) in said contact tank.

2. Installation according to claim 1, **characterised in that** the height (H) of the flotation tank is comprised between 1 and 4 m, preferably between 1 and 2.5 m, and that the width (L) of the flotation tank is comprised between 0.5 and 4 m.

3. Installation according to claim 1 or 2, **characterised in that** said means for supplying white water in the contact tank include a multiphase pump associated with nozzles capable of producing bubbles of a very small diameter.

4. Installation according to claim 3, **characterised in that** said means for supplying white water in the contact tank include a multiphase pump and a static mixer associated with nozzles capable of producing bubbles of a very small diameter.

5. Installation according to claim 3 or 4, **characterised in that** said nozzles are provided at a height (h) from the bottom of said contact tank comprised between 0.2 and 2 metres.

6. Installation according to claim 5, **characterised in that** said nozzles are provided with a nozzle density comprised between 3 and 30 nozzles, preferably between 5 and 12 nozzles, per square metre of said contact tank bottom.

7. Installation according to any one of the preceding claims, **characterised in that** said assembly is produced by connecting 2 to 24, preferably 2 to 12, modules.

8. Installation according to any one of the preceding claims, **characterised in that** its total length (LT) is comprised between 0.5 and 20 m, preferably between 1 and 12 m.

9. Installation according to any one of the preceding claims, **characterised in that** said means for discharging treated water comprise at least one perforated pipe provided longitudinally in the lower part of said flotation tank.

10. Installation according to any one of the preceding claims, **characterised in that** said means for discharging floating sludge comprise a scraper provided with means for moving along a longitudinal axis, transverse to the water distribution flow (A) in the flotation tank.

11. Installation according to any of the preceding claims, **characterised in that** the ratio between the height (H) and the width (L) of the flotation tank is greater than 1.1.
